(19) Europäisches Patentamt
European Patent Office
Office européen des brevets

(11) **EP 2 657 674 A1**

(12) **EUROPEAN PATENT APPLICATION**

(43) Date of publication:
**30.10.2013 Bulletin 2013/44**

(51) Int Cl.:
***G01M 17/04*** *(2006.01)*

(21) Application number: **13161862.1**

(22) Date of filing: **29.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.04.2012 IT MO20120109**

(71) Applicant: **Giuliano Group S.p.A.**
**42015 Correggio (RE) (IT)**

(72) Inventor: **Bonacini, Maurizio**
**42015 Correggio (RE) (IT)**

(74) Representative: **Brunacci, Marco**
**BRUNACCI & PARTNERS S.r.l.**
**Via Scaglia Est, 19-31**
**41126 Modena (IT)**

(54) **Test bench for suspensions of vehicles**

(57)    The test bench (1) for suspensions of vehicles comprises a bearing structure (2) and at least a measuring appliance (3) supported by the bearing structure (2) and having:
- a plate (4) intended to receive in support a wheel of a vehicle and associated with the bearing structure (2) which can oscillate between a raised position and a lowered position;
- measuring means (5) for measuring the force applied by the wheel onto the plate (4);
- at least an eccentric element (6) operatively associated with rotation means (7) and with the plate (4) and suitable for transforming the rotational motion produced by the rotation means (7) into the oscillation motion of the plate (4) between the raised position and the lowered position;
- at least a shock absorbing element (8) placed between the bearing structure (2) and the plate (4) and suitable for operating in contrast to the displacement of the plate (4) from the raised position to the lowered position

Fig. 1

## Description

The present invention relates to a test bench for suspensions of vehicles.

In car repair shops or the like, the use of so-called test benches for vehicle suspensions is known, suitable for measuring the level of efficiency of the suspensions of a motor vehicle.

Test benches for suspensions of known types are of different types according to the specific method of measuring applied and the specific structure of the bench itself.

For example, test benches for suspensions are known based on the widespread common measuring model EUSAMA (European Shock Absorber Manufactures Association).

According to this model, the EUSAMA parameter is determined as a percentage ratio between the minimum dynamic load and the static load on each wheel.

In practice this ratio indicates the capacity to maintain contact between the tyre and the road in the most critical conditions.

Test benches using the EUSAMA model generally comprise a pair of horizontal platforms side by side, intended to receive in support the respective wheels of a vehicle and which are mounted on a bearing structure in order to oscillate vertically.

Each platform is connected to a respective asynchronous motor suitable for controlling the oscillation.

In particular, each asynchronous motor is used to rotate a respective horizontal shaft with two eccentric elements with 6 mm vertical range.

The eccentric elements are arranged below the platform, in contact with it, and the shaft rotation ensures the controlled oscillation of the platform with a maximum range of 6 mm.

The motor is powered by direct insertion from the mains power, at full speed and then de-excited, and during this action a load cell system connected to the platform measures the weight of the wheel instant by instant.

In particular, having enabled the motor the platform reaches 23Hz of vertical oscillation (with the motor powered at 50 Hz) and, starting from the moment of de-excitation the motor continues to oscillate, running off until it stops.

The instantaneous weight offloaded by the wheel onto the platform is measured during this run off.

A second type of test bench for suspensions is known in the document no. EP 1 557 656 B1.

In particular, this document describes an appliance for testing suspensions comprising a base, a plate intended to receive in support the wheel of a vehicle, wherein the plate is operatively connected to a motor by a pair of levers and a first elastic element and is associated with the base using a second elastic element.

In use, the system of levers is controlled by the motor to induce a vertical oscillation of the plate at variable amplitude, in which the oscillation amplitude is determined by the elastic elements inside the test bench and by the suspension itself.

The measurement of the linear displacement of the plate done at different oscillation frequencies is used to determine the efficiency of the suspension. These known test benches for suspensions are however susceptible to upgrading, aiming in particular to make the measurements of suspension efficiency more effective and precise.

The main aim of the present invention is to provide a test bench for suspensions of vehicles which allows to test the suspensions in a precise and efficient way. Another object of the present invention is to provide a test bench for suspensions of vehicles having reduced overall dimensions.

Another object of the present invention is to provide a test bench for suspensions of vehicles which allows to overcome the mentioned drawbacks of the state of the art in the ambit of a simple, rational, easy and effective to use as well as low cost solution.

The above objects are achieved by the present test bench for suspensions of vehicles, comprising comprising a bearing structure, at least a measuring appliance supported by said bearing structure and having:

- at least a plate intended to receive in support a wheel of a vehicle and associated with said bearing structure which can oscillate between a raised position and a lowered position;
- measuring means for measuring the force applied by said wheel onto said plate; - at least an eccentric element operatively associated with rotation means and with said plate and suitable for transforming the rotational motion produced by said rotation means into the oscillation motion of said plate between said raised position and said lowered position;

characterized by the fact that said measuring appliance comprises at least a shock absorbing element placed between said bearing structure and said plate and suitable for operating in contrast to the displacement of said plate from said raised position to said lowered position.

Other characteristics and advantages of the present invention will become more evident from the description of three preferred, but not sole, embodiments of a test bench for suspensions of vehicles, shown purely as an example but not limited to the annexed drawings in which:

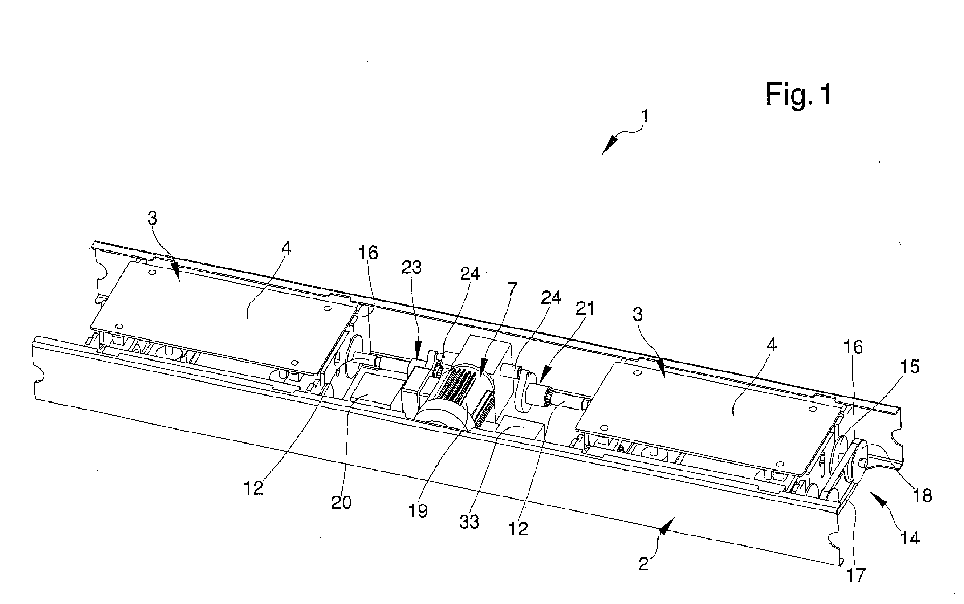

Figure 1 is an axonometric view of the test bench for suspensions according to the invention;
Figure 2 is an axonometric view of a detail of the test bench for suspensions according to a first embodiment of the invention;
Figure 3 is an axonometric and partial section view of a detail of the test bench for suspensions according to the first embodiment of the invention;
Figure 4 is an axonometric and partial section view of a detail of the test bench for suspensions according to the first embodiment of the invention;
Figure 5 is an axonometric and partial exploded view of a detail of the test bench for suspensions according to the first embodiment of the invention;
Figure 6 is an axonometric and partial exploded view of a detail of the test bench for suspensions according to a second embodiment of the invention;
Figure 7 is an axonometric and partial exploded view of a detail of the test bench for suspensions according to a third embodiment of the invention;
Figure 8 is an axonometric of a detail of the test bench for suspensions according to the third embodiment of the invention.

With particular reference to such figures, globally indicated by 1 is a test bench for suspensions of vehicles, usable in particular in car repair shops or the like. The test bench 1 comprises a bearing structure 2, made up of a framework which extends horizontally and which is associable with a conventional platform with ramps for the positioning and parking of the vehicle during the test of the suspensions.

Referring to the particular embodiments shown in the figures, the test bench 1 comprises a pair of measuring appliances 3, supported by the bearing structure 2, side by side and suitably spaced and suitable for testing the suspensions on respective wheels of a vehicle.

In particular, each of the measuring appliances 3 is made inside a respective housing on the bearing structure 2.

Each of the measuring appliances 3 comprises:

-    a plate 4 intended to receive in support a wheel of a vehicle and associated with the bearing structure 2 which can oscillate between a raised position and a lowered position;
-    measuring means 5 suitable for measuring the force applied by the wheel onto the plate 4;
-    a plurality of eccentric elements 6 operatively associated with rotation means 7 and with the plate 4 and suitable for transforming the rotational motion of the rotation means 7 into the oscillation motion of the plate 4 between the raised position and the lowered position.

Usefully, in order to guarantee effective testing of the suspensions, the range of the plate 4 between the lowered position and the raised position, given by the dimensions and rotation axis of the eccentric elements 6, is greater than or equal to 10 mm.

Preferably, the range of the plate 4 between the lowered position and the raised position is equal to 24 mm.

Usefully, the oscillation frequency interval of the plates 4 during the suspension test, given by the variations in rotational speed of the eccentric elements 6, is between 0 Hz and 25 Hz.

Preferably, the oscillation frequency interval of the plates 4 during the suspension test is between 0 Hz and 5 Hz.

Advantageously, each of the measuring appliances 3 comprises one or more  shock absorbing elements 8 interposed between the bearing structure 2 and the plate 4.

The shock absorbing elements 8, in particular, are suitable for operating in contrast to the displacement of the plate 4 from the raised position to the lowered position, and therefore in contrast to the weight of the vehicle on the plate 4, in order to guarantee uniform oscillation of the plate itself during the suspension test.

In fact, when the plate 4 starts to descend from the raised position to the lowered position and the eccentric elements 6 pass the angular position corresponding to the maximum vertical lift of the plate 4, the weight of the vehicle can "anticipate" the normal rotation of the eccentric elements 6 leading to variations in the angular speed of the eccentric elements themselves.

This could in fact lead to a non-uniform oscillation of the plate, and consequently a less precise measurement of the efficiency of the vehicle suspensions.

The shock absorbing elements 8, therefore, act in contrast to the weight of the vehicle, eliminating or in any case limiting considerably this variation in the angular speed of the eccentric elements 6 and thereby ensuring a uniform oscillation of the plate 4.

The presence of the shock absorbing elements 8 is particularly useful in the event of the suspension test being carried out on particularly heavy vehicles (for example those with high loads equal to 1000 Kg per wheel).

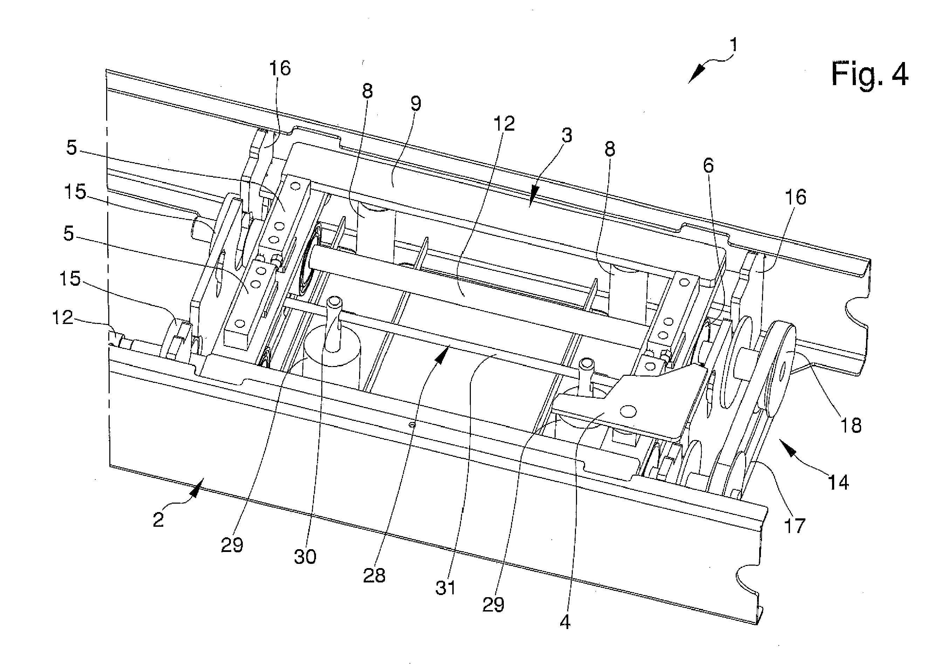

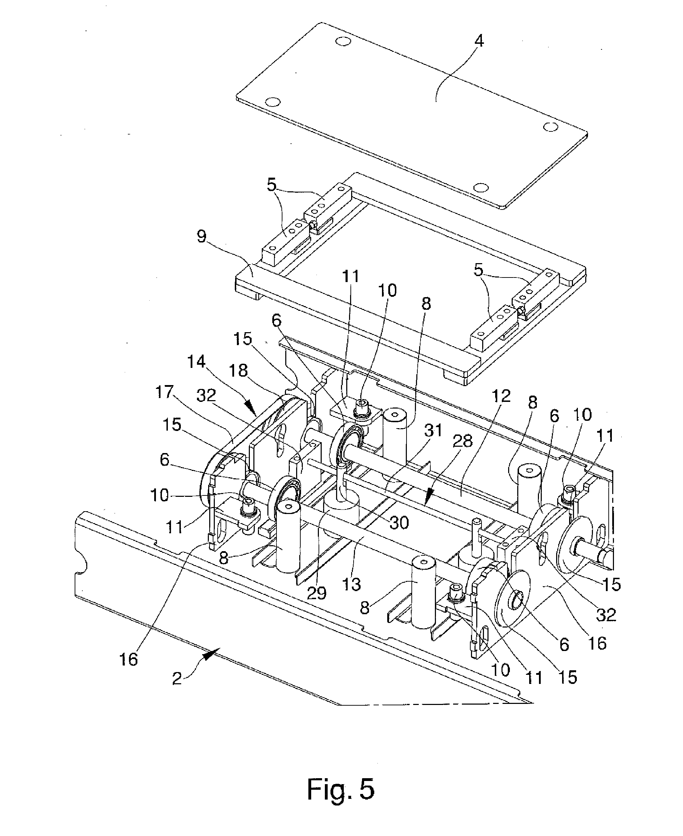

In a first embodiment of the test bench 1, shown in particular in figures 4 and 5, each of the measuring appliances 3 comprises four shock absorbing elements 8, arranged at a distance to each other and substantially in the proximity of the four opposite corners of the plate 4.

Different embodiments cannot however be ruled out in which there are, for example, six shock absorbing elements, four arranged at a distance to each other and in the proximity of the four opposite corners of the plate 4 and two arranged at a distance to each other in correspondence to a substantially central portion of the plate 4.

Each of the shock absorbing elements 8 can be made up of a mechanical device, e.g. of the type of a mechanical contrast spring, a pneumatic device, e.g. of the type of a pneumatic spring, a hydraulic device, e.g. of the type of a hydraulic spring, or one or more devices of mixed technologies, in turn made up of mechanical, hydraulic, pneumatic devices or other types of devices.

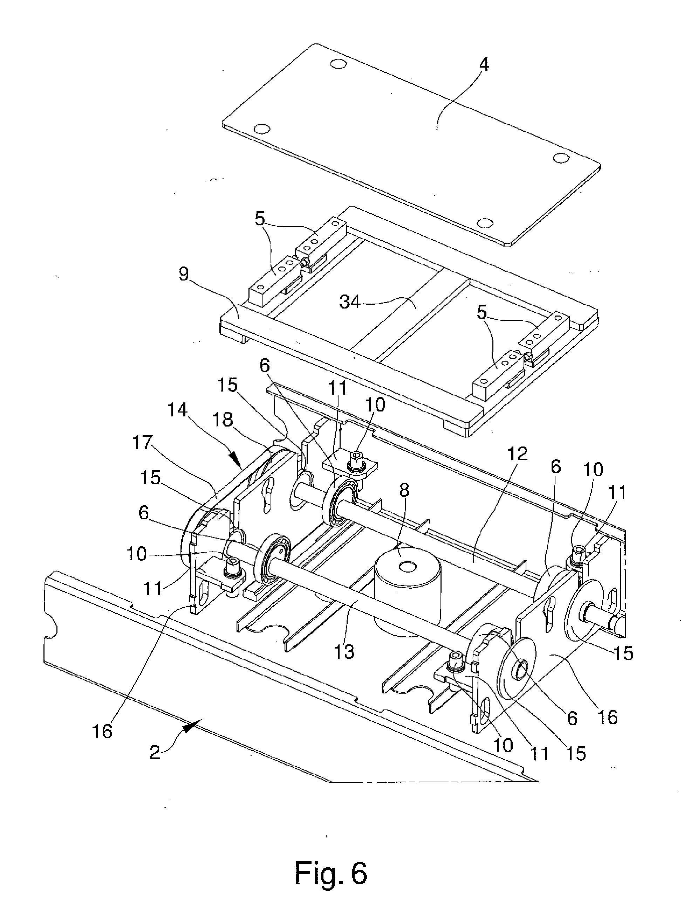

In a second alternative embodiment, shown in detail in figure 6, each of the measuring appliances 3 comprises a single shock absorbing element 8, arranged in correspondence to a substantially central portion of the housing obtained on the bearing structure 2 and placed in between the bearing structure itself and the plate 4.

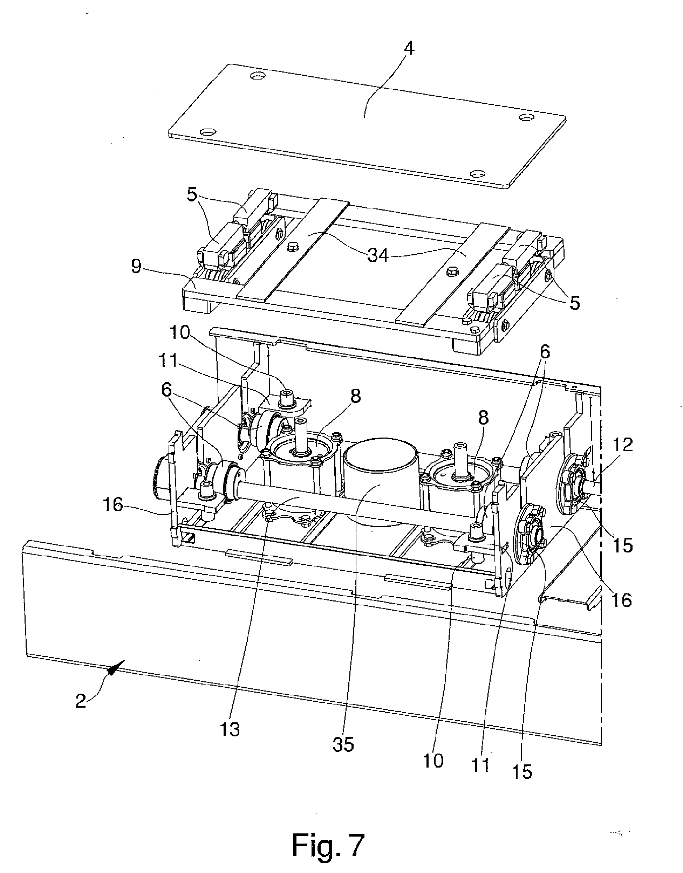

With particular reference to a third possible embodiment of the invention, shown in figure 7, each of the measuring appliances 3 comprises a pair of shock absorbing elements 8 arranged at a distance to each other, made up of their respective pneumatic or hydraulic cylinders.

In particular, according to this possible third embodiment, each appliance 3 comprises a pneumatic or hydraulic chamber 35 connected to at least one of the shock absorbing elements 8 and suitable for stabilising the internal pressure according to the variation in the internal volume of the shock absorbing element itself.

Preferably, the chamber 35 is operatively connected to both shock absorbing elements 8.

Again according to this preferred embodiment, the chamber 35 is arranged in correspondence to a central portion of the housing made on the bearing structure 2, between the two shock absorbing elements 8.

Advantageously, referring to all possible embodiments, each shock absorbing element 8 can be made of a pneumatic or hydraulic elastic element, such as a pneumatic cylinder, an hydraulic cylinder or similar device, connected to a suitable adjusting circuit.

In particular, the adjusting circuit is suitable for adjusting the air pressure or in any case the fluid inside the shock absorbing element 8.

During the descent of the plate 4, the shock absorbing element 8 acts by exerting a force in contrast to the movement of the plate 4 towards the lowered position and this contrasting force is given by the internal pressure of the shock absorbing element itself.

In particular, the adjustment of the internal pressure of each shock absorbing element 8 can comprise the following steps:

- measuring the static load applied to the plate 4 when the wheel of a vehicle is positioned on it;
- calculating the optimum pressure value of the shock absorbing element 8 starting from the measured static load.

In particular, the optimum pressure value calculated is the value of the internal pressure of the shock absorbing element 8 required to produce an overall contrasting force equal to and opposing the static load.

Subsequently, the adjustment comprises a variation and a continuous measurement of the instantaneous internal pressure of the shock absorbing element 8 until the internal pressure of the shock absorbing element corresponds to the calculated optimum pressure.

In particular, this adjustment comprises the continuous repetition of the steps for:

- varying the internal pressure of the shock absorbing element 8;
- measuring the internal pressure of the shock absorbing element 8;

Specifically, the internal pressure adjusting procedure for each shock absorbing element 8 according to the static load applied can be done using appropriate adjusting means with:

- measuring means of the static load applied to the plate 4 when the wheel of a vehicle is positioned on it;
- calculating means of the optimum pressure value starting from the measured static load.
- variation means of the internal pressure of the shock absorbing element 8;
- measuring means of the internal pressure of the shock absorbing element 8.

The aforesaid measuring means of the static load are preferably made up by the same measuring means 5 used to test the suspensions of the vehicle.

The calculating means of the optimum pressure value can be made using a suitable hardware device and/or software programme and incorporated in the measuring, adjusting and control electronics of the test bench 1.

Preferably the variation means of the internal pressure of the shock absorbing element 8 are composed of suitable solenoid valves operatively connected to the shock absorbing elements themselves.

Moreover, the measuring means of the internal pressure of the shock absorbing element 8 can be composed of one or more pressure sensors operatively connected to the shock absorbing elements themselves.

At the end of the suspension test cycle, each shock absorbing element 8 can be depressurised to a default internal pressure, ready for a new adjusting cycle.

According to a further embodiment of the bench 1, not shown in the figures, each of the measuring appliances 3 can comprise the combined use of a plurality of shock absorbing elements 8 at a distance to each other, composed of e.g. four mechanical contrast springs, arranged substantially in the proximity of the four opposite corners of the plate 4, together with a central shock absorbing element 8, composed of e.g. an air spring, a pneumatic cylinder, a hydraulic cylinder or the like.

Moreover, the use of a different number of shock absorbing elements 8 cannot be ruled, as well as different combinations of shock absorbing elements 8 of different types.

Usefully, each of the measuring appliances 3 can have one or more thrust actuator elements, not shown in the figures, placed between the bearing structure 2 and the plate and suitable for triggering during the displacement of the plate 4 from the lowered position to the raised position.

These thrust actuator elements therefore act in contrast to the weight of the vehicle as the plate 4 rises to the raised position, considerably limiting the effort of the rotation means 7.

The presence of thrust actuator elements is particularly useful in the case of the suspensions being tested on particularly heavy vehicles.

Usefully, both the shock absorbing elements 8 and the thrust actuator elements can be made up of the same device suitable for accompanying the descent of the plate 4 toward the lowered position and for providing a further thrust as the plate 4 rises to the raised position.

For example, thrust actuator elements can be made using a hydraulic or pneumatic actuator cylinder, an air spring or a mechanical spring.

Usefully, each of the measuring appliances 3 comprises a substantially rectangular frame 9 suitable for supporting the plate 4 and associated with the bearing structure 2 moving between the raised position and the lowered position.

Each of the shock absorbing elements 8 acts between the bottom of the bearing structure and a respective portion of the frame 9.

In particular, in the first embodiment shown in detail in figures 4 and 5, each of the shock absorbing elements 8 acts on respective portions of the frame 9, substantially in correspondence to the corners of the frame itself.

Referring to the second embodiment shown in detail in figure 6, the only shock absorbing element 8 acts on a crossbar 34 of the frame 9, substantially in correspondence to a central portion of the frame itself.

Referring, on the other hand, to the third embodiment shown in detail in figure 7, the two shock absorbing elements 8 act on respective crossbars 34 spaced at a distance to each other of the frame 9.

Guide means for sliding the frame 9 are composed of four pins 10 obtained in correspondence to the four corners of the frame 9 and protruding downwards, fitted sliding in the respective through holes made in the supports 11 integral to the bearing structure 2.

The measuring means 5 of the force applied by the wheel onto the plate 4 are composed of two pairs of load cells placed between the frame 9 and the plate 4. In particular, each pair of load cells 5 is fastened to opposite portions of the frame 9.

Still referring to the embodiment of the test bench 1 shown in the figures, and as shown in particular in figures 4 and 5, each of the measuring appliances 3 comprises a first shaft 12, supported horizontally and axially rotatable by the bearing structure 2, operatively connected to the rotation means 7 and having two eccentric elements 6.

In particular, the two eccentric elements 6 are keyed on the first shaft 12 at a distance to each other and are engaged in correspondence to respective lower portions of the frame 9.

Each measuring appliance 3 also comprises a further second shaft 13, supported by the bearing structure 2, arranged along a horizontal direction parallel to the first shaft 12, axially rotatable and having two further eccentric elements 6 at a distance to each other and engaged in correspondence to respective lower portions of the frame 9.

Different embodiments cannot however be ruled out wherein eccentric elements 6 of different conformation are associated by means of different solutions with the first shaft 12, the second shaft 13 and the frame 9.

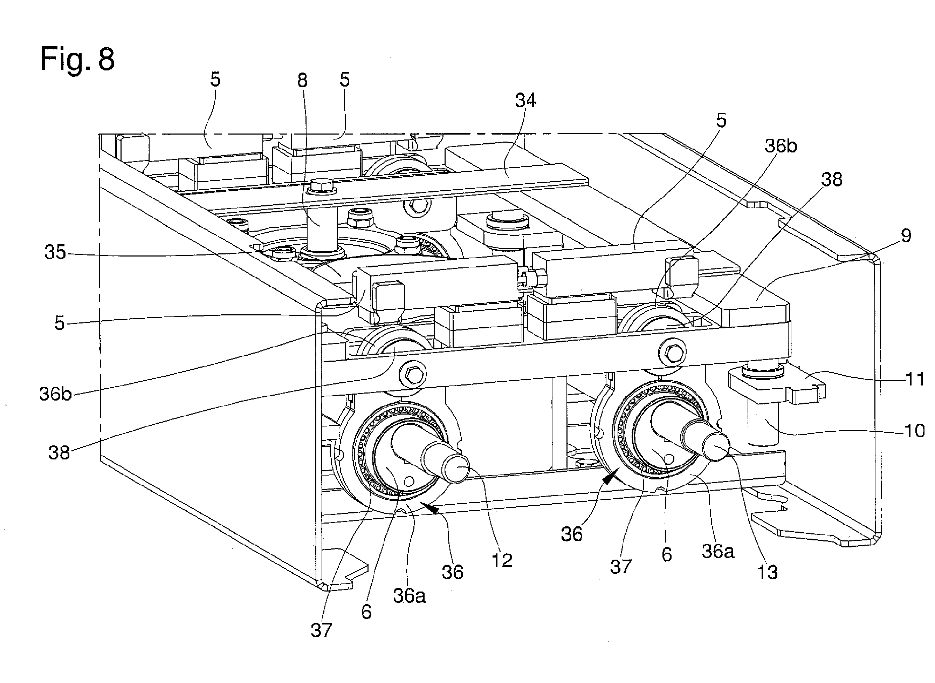

For example, referring to the possible alternative embodiment shown in figure 8, each of the eccentric elements 6 can be operatively associated with the frame 9 by means of respective connecting rods 36 suitable for transforming the rotational motion of the eccentric elements 6 into the translational vertical motion of the frame 9 and, therefore, of the plate 4.

In particular, each of the eccentric elements 6 is inserted inside the head 36a of the connecting rod 36 with interposition of a special ball bearing 37. The foot 36b of the connecting rod 36 is associated rotatable with a respective portion of the frame 9 with interposition of a further ball bearing 38.

Transmission means 14 are associated with the first shaft 12 and with the second shaft 13 and are suitable for transmitting the rotational motion of the first shaft 12 to the second shaft 13.

In particular, the first shaft 12 and the second shaft 13 are supported at the extremities by respective pairs of supports with ball bearings 15 fixed to two vertical support walls 16 of the bearing structure 2.

In particular, these support walls 16 delimit the compartment housing the measuring appliance 3.

Preferably, the transmission means 14 are composed of a belt 17 mounted on special pulleys 18 keyed on respective free extremities of the first shaft 12 and of the second shaft 13 which extend beyond one of the support walls 16. Advantageously, the rotation means 7 of the test bench 1 comprise a single gear motor 19 and connection/ disconnection means suitable for connecting/ disconnecting alternatively the gear motor 19 to/ from the first shaft 12 of each of the measuring appliances 3.

Moreover, the rotation means 7 have adjustment means 20 suitable for adjusting the speed of the gear motor 19 in order to be able to vary the oscillation frequency of the plates 4 during the suspension test.

For example, the adjustment means 20 can be composed of an inverter, a brushless or stepper motor.

The use of other types of adjustment means 20 of the speed of the gear motor 19 cannot however be ruled out.

Moreover, the bench 1 has an electronic control and measuring unit 33.

Usefully, the use of a single gear motor 19 for starting the oscillation of both plates 4 allows to group within the same housing made on the bearing structure 2 the gear motor 19, the inverter 20, the electronic control unit 33 and the connection/ disconnection means, considerably reducing the overall dimensions of the test bench 1.

Usefully, the connection/ disconnection means comprise:

- first removable coupling means, indicated as a whole with reference number 21, suitable for coupling in a removable way a rotating element 22 of the gear motor 19 with the first shaft 12 of one of the measuring appliances 3;
- second removable coupling means, indicated as a whole with reference number 23, suitable for coupling in a removable way the rotating element 22 of the gear motor 19 with the first shaft 12 of the other of the measuring appliances 3;
- operating means 24. suitable for operating alternately the first removable coupling means 21 and the second removable coupling means 23.

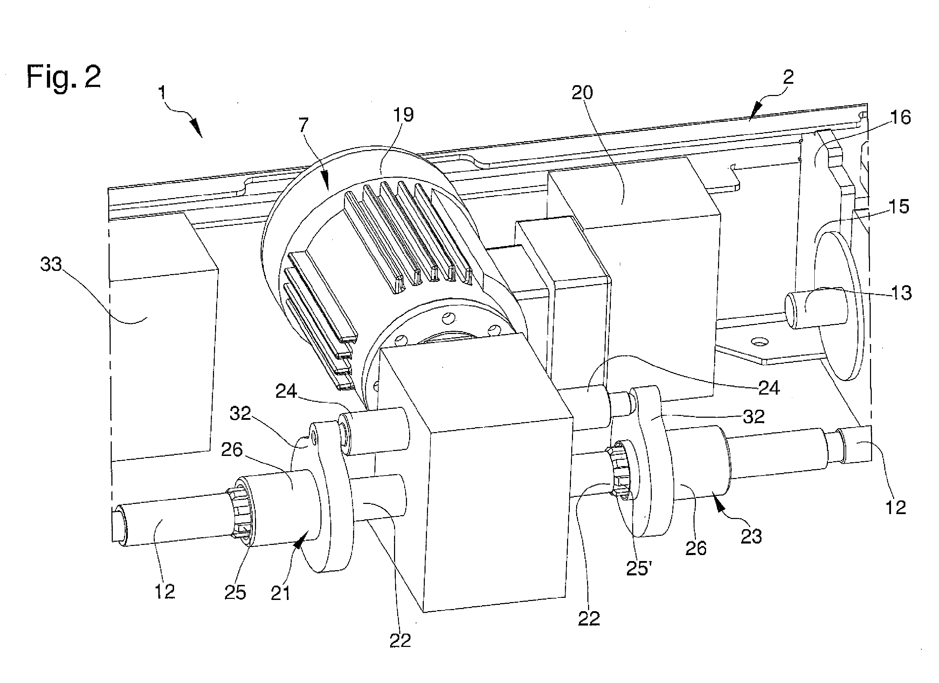

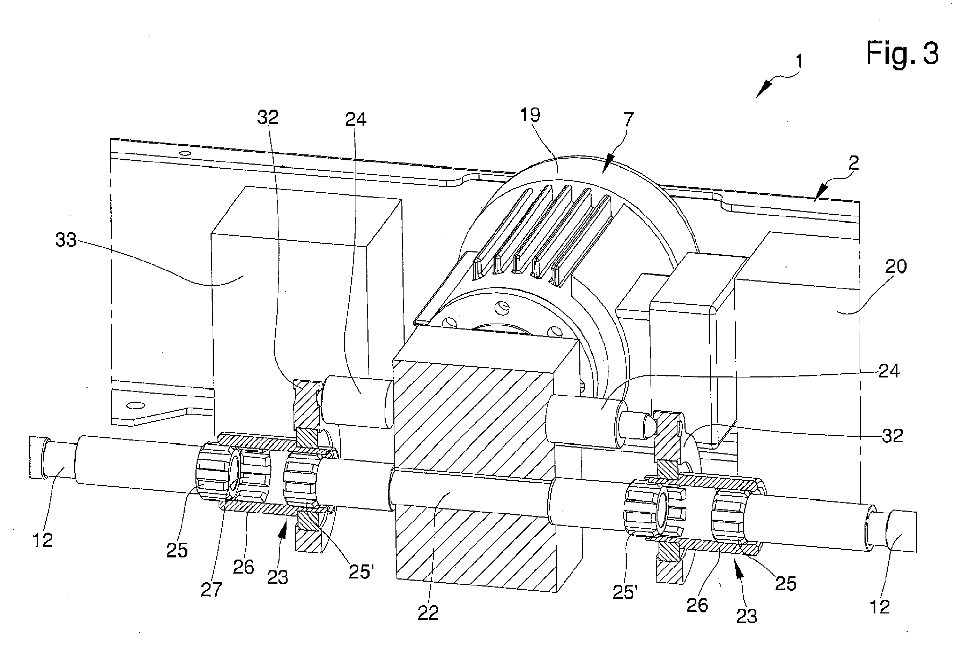

With reference to the special embodiment shown in the figures and as illustrated in detail in figure 2 and 3, both the first removable coupling means 21 and the second removable coupling means 23 are made by means of a pneumatic coupling with radial toothing.

In particular, the rotating element 22 is composed of a horizontal rod.

Each of the first and second removable coupling means 21 and 23 comprises a radial toothing 25 made onto an extremal section of the first shaft 12, a sleeve 26 with an inner toothing 27 and associated axially sliding and integral in rotation with an extremity of the rotating element 22.

The operating means 24 are made up of a pair of actuator elements 24 operatively associated with respective sleeves 26.

In particular, each of the actuator elements 24 is suitable for moving the respective sleeve 26 along the extremity of the rotating element 22 between a disengagement position, wherein the sleeve 26 is substantially moved away from the extremal section of the first shaft 12, and a coupling position, wherein the sleeve 26 is at least in part fitted on the extremal section of the first shaft 12 and the teeth of the inner toothing 27 are engaged between the teeth of the radial toothing 25.

Moreover, each of the sleeves is made axially sliding and integral in rotation with respect to the extremities of the rotating element 22 by a further radial toothing 25', made in correspondence to the end of the rotating element 22 and engaged with the inner toothing 27 of the sleeve 26.

Usefully, the actuator elements 24 do not act directly on the sleeves 26 but on appropriate bearings 32 mounted on the sleeves 26 and sliding horizontally together with the sleeves themselves.

Other embodiments of the test bench 1 cannot however be ruled out, wherein the first and second removable coupling means 21 and 23 are of a different type and comprise different types of couplings.

For example, the first and second removable coupling means 21 and 23 can be obtained using mechanical screw couplings exploiting the two rotational directions of the rotating element 22 of the single gear motor 19.

Usefully, each of the measuring appliances 3 has retention means 28 suitable for holding the plate 4 in a fixed position, in order to avoid the wheel that is not being measured floating on the shock absorbing elements 8 while testing the suspensions on the other wheel.

In particular, the retention means 28 comprise an actuator device 29 integrally associated with the bearing structure and having a mobile element 30 associated with the frame 9.

The mobile element 30 can be positioned between an extracted position, wherein the frame 9 is free to oscillate between the raised position and the lowered position to perform the suspension test, and a retracted position, wherein the mobile element 30 retains the frame 9 in a fixed position. Preferably, there are two actuator devices 29 for each of the measuring appliances 3.

Each actuator device 29 is composed of a linear actuator and the mobile element 30 is composed of the stem of the linear actuator itself.

The cylinder of each linear actuator 29 is fixed to the bottom of the bearing structure 2 and the stem 30 extends vertically and has a through slot.

A horizontal rod 31 is inserted and vertically translates in the slots of each of the stems 30 and is fixed to the extremities of respective blocks 32 integrally associated with the frame 9 in correspondence to opposite portions of the frame itself.

With the stem 30 in the extracted position the rod is free to slide vertically inside the slots and therefore the frame 9 is free to oscillate between the raised position and the lowered position in order to test the suspension.

With the stem 30 in the lowered position the rod 31 is pushed and held downwards and therefore the frame 9 is held in a fixed position.

The test bench 1 comprises means for processing the data measured during the test on the suspensions of a vehicle, relating to the force measured via the measuring means 5 and applied by the wheel of the vehicle on the plate 4. Advantageously, the data processing means, which are implemented using appropriate hardware and/or an appropriate software programme, have a plurality of different analysis algorithms.

Preferably, these different analysis algorithms are selected from the group comprising:

- an EUSAMA analysis algorithm;
- an algorithm analysing the damping ratio $\zeta$ of the shock absorber of a vehicle.

In particular, the EUSAMA analysis algorithm measures an EUSAMA parameter defined by the following formula:

$$\mathrm{EUSAMA} = \mathrm{PD}/\mathrm{PS} \times 100$$

where PD is the measurement of the minimum dynamic load offloaded by the wheel of the vehicle on the support plate 4, measured over the whole interval of oscillation frequency of the plate 4, while PS represents the measurement of the corresponding static load.

Moreover, the EUSAMA analysis algorithm envisages the measurement of the EUSAMA frequency defined as the minimum dynamic load frequency, measured over the whole interval of oscillation frequency of the plate 4. Referring to a spring mass oscillating system, the damping ratio $\zeta$ is defined as:

$$\zeta = c/c_c$$

where $c_c = 2\times\sqrt{(k\times m)}$, with
m: mass;
c: damping coefficient;
k: elastic constant.

In this regard it is noted that, as known, the vehicle suspension system, not only ensures greater comfort, but also substantially contributes to driving safety, by rapidly damping the oscillations induced by rough conditions and therefore guaranteeing greater stability of the vehicle when driving.

The damping ratio $\zeta$ defined above is the physical parameter, the measurement of which allows us to classify the quality of the damping of the induced oscillations, meant as the speed of damping of the oscillation.

In other words, the damping ratio $\zeta$ allows us to classify the efficiency of the shock absorbers of a vehicle.

In particular, referring to the use of the damping ratio $\zeta$ to assess the efficiency of a shock absorber, we can use the following classification:

$\zeta \leq 0.1$ implies insufficient damping, and therefore a hazard while driving;
$0.1 \leq \zeta \leq 0.15$ implies weak damping and therefore the replacement of the tested shock absorber is recommended;
$0.15 \leq \zeta$ implies acceptable damping (which in any case varies with the structure of the vehicle).

It has therefore been ascertained that the described invention achieves the proposed objects.

**Claims**

1. Test bench (1) for suspensions of vehicles, comprising a bearing structure (2), at least a measuring appliance (3) supported by said bearing structure (2) and having:

   - at least a plate (4) intended to receive in support a wheel of a vehicle and associated with said bearing structure (2) which can oscillate between a raised position and a lowered position;
   - measuring means (5) for measuring the force applied by said wheel onto said plate (4);
   - at least an eccentric element (6) operatively associated with rotation means (7) and with said plate (4) and suitable for transforming the rotational motion produced by said rotation means (7) into the oscillation motion of said plate (4) between said raised position and said lowered position;

   **characterized by** the fact that said measuring appliance (3) comprises at least a shock absorbing element (8) placed between said bearing structure (2) and said plate (4) and suitable for operating in contrast to the displacement of said plate (4) from said raised position to said lowered position.

2. Test bench (1) according to the claim 1, **characterized by** the fact that said shock absorbing element (8) comprises at least one between a mechanical device, a pneumatic device, a hydraulic device or the like.

3. Test bench (1) according to one or more of the preceding claims, **characterized by** the fact that said measuring appliance (3) comprises at least a thrust actuator element placed between said bearing structure (2) and said plate (4) and suitable for triggering during the displacement of said plate (4) from said lowered position to said raised position.

4. Test bench (1) according to one or more of the preceding claims, **characterized by** the fact that said measuring appliance (3) comprises at least a first shaft (12), supported axially rotatable by said bearing structure (2), operatively connected to said rotation means (7) and having said eccentric element (6).

5. Test bench (1) according to the claim 4, **characterized by** the fact that said measuring appliance (3) comprises at least two of said eccentric elements (6) integrally associated with said first shaft (12) spaced at a distance to each other and operatively associated with substantially opposite lower portions of said plate (4).

6. Test bench (1) according to one or more of claims 4 and 5, **characterized by** the fact that said measuring appliance (3) comprises at least a second shaft (13) supported axially rotatable by said bearing structure (2), motion transmission means (14) associated with said first shaft (12) and with said second shaft (13) and suitable for transmitting the rotational motion of said first shaft (12) to said second shaft (13), and at least two of said eccentric elements (6) integrally associated with said second shaft (13) spaced at a distance to each other and operatively associated with substantially opposite lower portions of said plate (4).

7. Test bench (1) according to one or more of the preceding claims, **characterized by** the fact that said measuring appliance (3) comprises at least a frame (9) for supporting said plate (4) associated mobile with said bearing structure (2), said eccentric element (6) being arranged in contact with at least a lower portion of said frame (9).

8. Test bench (1) according to the claim 7, **characterized by** the fact that said measuring means (5) comprise at least a load cell (5) placed between said frame (9) and said plate (4).

9. Test bench (1) according to one or more of the preceding claims, **characterized by** the fact that it comprises at least two of said measuring appliances (3) and connection/disconnection means (21, 23, 24) between said rotation means (7) and the eccentric elements (6) of each of said measuring appliances (3).

10. Test bench (1) according to one or more of the preceding claims, **characterized by** the fact that said rotation means (7) comprise a single gear motor (19).

11. Test bench (1) according to the claim 10, **characterized by** the fact that it comprises adjustment means (20) suitable for adjusting the speed of said gear motor (19).

12. Test bench (1) according to one or more of the claims 9 to 11, **characterized by** the fact that said connection/disconnection means (21, 23, 24) comprise:

   - first removable coupling means (21) between at least a rotating element (22) of said gear motor (19) and said first shaft (12) of one of the measuring appliances (3);
   - second removable coupling means (23) between said rotating element (22) of the gear motor (19) and said first shaft (12) of the other of the measuring appliances (3);
   - operating means (24) suitable for alternately operating said first removable coupling means (21) and said second removable coupling means (23).

13. Test bench (1) according to the claim 12, **characterized by** the fact that said first removable coupling means (21) and/or said second removable coupling means (23) are of the type of a pneumatic coupling, a mechanical coupling or the like.

14. Test bench (1) according to one or more of the claims 12 and 13, **characterized by** the fact that said first removable coupling means (21) and/or said second removable coupling means (23) comprise at least a radial toothing (25) made onto at least an extremal section of said first shaft (12), at least a sleeve (26) with an inner toothing (27) and associated axially sliding and integral in rotation with an extremity of said rotating element (22), and by the fact that said operating means (24) comprise at least an actuator element (24) operatively associated with said sleeve (26) and suitable for moving said sleeve (26) along said extremity of the rotating element (22) between a disengagement position, wherein said sleeve (26) is substantially moved away from said extremal section of the first shaft (12), and a coupling position, wherein said sleeve (26) is at least in part fitted on said extremal section of the first shaft (12) and the teeth of said inner toothing (27) are engaged between the teeth of said radial toothing (25).

15. Test bench (1) according to one or more of the preceding claims, **characterized by** the fact that said measuring appliance (3) comprises retention means (28) of said plate (4) in a fixed position.

16. Test bench (1) according to one or more of the preceding claims, **characterized by** the fact that said retention means (28) comprise at least an actuator device (29) integrally associated with said bearing structure (2) and having a mobile element (30) associated with said plate (4), said mobile element (30) being positionable between an extracted position, wherein said plate (4) is free to oscillate between said raised position and said lowered position, and a retracted position, wherein said mobile element (30) is suitable for retaining said plate (4) in said fixed position.

17. Test bench (1) according to one or more of the preceding claims, **characterized by** the fact that it comprises means for processing the data measured during a test on the suspensions of said vehicle, relating to the force measured via the measuring means (5) and applied by the wheel of the vehicle on said plate (4), wherein said processing means have at least two separate analysis algorithms of said data.

18. Test bench (1) according to the claim 17, **characterized by** the fact that said separate data analysis algorithms are selected from the group comprising:

   - an EUSAMA analysis algorithm;
   - an algorithm analysing a damping ratio $\zeta$.

Fig. 1

EP 2 657 674 A1

Fig. 2

Fig. 3

EP 2 657 674 A1

Fig. 4

EP 2 657 674 A1

# Fig. 5

Fig. 6

Fig. 7

Fig. 8

EP 2 657 674 A1

**Europäisches Patentamt**
**European Patent Office**
**Office européen des brevets**

# EUROPEAN SEARCH REPORT

Application Number

EP 13 16 1862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 3 981 174 A (HIMMLER GUNTHER)<br>21 September 1976 (1976-09-21)<br>* column 2, line 38 - column 3, line 14 *<br>* figures 1,2 *<br>----- | 1-11,<br>15-18<br>12-14 | INV.<br>G01M17/04 |
| X<br><br>A | US 3 815 404 A (BRISARD G)<br>11 June 1974 (1974-06-11)<br><br>* column 2, line 8 - column 3, line 40 *<br>* column 4, line 1 - line 8 *<br>* figure 1 *<br>----- | 1-5,8,<br>10,11,<br>15-18<br>12-14 | |
| X<br>A | CN 100 445 720 C (UNIV JILIN [CN])<br>24 December 2008 (2008-12-24)<br>* the whole document *<br>----- | 1-11,<br>15-18<br>12-14 | |

TECHNICAL FIELDS
SEARCHED (IPC)

G01M

The present search report has been drawn up for all claims

| Place of search | Date of completion of the search | Examiner |
|---|---|---|
| The Hague | 17 July 2013 | Reto, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 16 1862

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2013

| Patent document cited in search report | | Publication date | Patent family member(s) | | Publication date |
|---|---|---|---|---|---|
| US 3981174 | A | 21-09-1976 | DE | 2445406 B1 | 18-12-1975 |
| | | | FR | 2285605 A1 | 16-04-1976 |
| | | | GB | 1515717 A | 28-06-1978 |
| | | | JP | S5160874 A | 27-05-1976 |
| | | | JP | S5752975 B2 | 10-11-1982 |
| | | | US | 3981174 A | 21-09-1976 |
| US 3815404 | A | 11-06-1974 | AU | 461630 B2 | 29-05-1975 |
| | | | AU | 4816272 A | 02-05-1974 |
| | | | BE | 790320 A1 | 15-02-1973 |
| | | | CH | 558010 A | 15-01-1975 |
| | | | DE | 2254272 A1 | 17-05-1973 |
| | | | ES | 407770 A1 | 01-11-1975 |
| | | | FR | 2159663 A5 | 22-06-1973 |
| | | | GB | 1347435 A | 27-02-1974 |
| | | | IT | 969692 B | 10-04-1974 |
| | | | NL | 7215059 A | 10-05-1973 |
| | | | US | 3815404 A | 11-06-1974 |
| CN 100445720 | C | 24-12-2008 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1557656 B1